# EUROPEAN PATENT APPLICATION

(11) **EP 2 156 987 A1**
(43) Date of publication of application: **24.02.2010**
(21) Application number: 08164329.8
(22) Date of filing: 15.09.2008
(51) Int. Cl.: B60R 11/04, G01S 3/781, G02B 23/12

(54) **Infrared system for assisting driving vehicle**

(30) Priority: 22.08.2008 CN 200820198882 U
(71) Applicant: Guangzhou SAT Infrared Technology Co., Ltd., Guangzhou 510730 (CN)
(72) Inventor: Wu, Jiping, 510730, Guangzhou (CN)
(74) Representative: Gervasi, Gemma

(57) **Abstract**

An infrared system for assisting driving vehicle comprises an infrared imaging device for photographing the object ahead the vehicle real-timely and a LCD for displaying the photographed image, wherein the infrared imaging device is connected to a magnetic base and mounted to the housing of the vehicle by the magnetic base, wherein the LCD is mounted in the driver's cab. By means of the LCD the driver can find the object 100 m ahead the vehicle, and thus he can identify the road, the walkers, the cyclists, and the obstacles. Especially when he is tired and driving in the night, the system can help him to reduce the stress. He can be alert and wakeful to handle the emergeney situations very quickly and properly. Thus the driving safety is improved.

## Description

### Field of Invention

The present invention relates to a system for assisting driving, especially to an infrared system for assisting driving vehicle.

### State of the art

Generally, when driving in the night, the driver mainly uses the low beam and high beam to illuminate the road. The effective illuminating distance of the low beam is about 40 m, and that of the high beam is about 100 m. The distance for the driver to react is about 70 m when an emergent event occurs on the road. However, the visible distance for the driver is even shorter due to the limited brightness of the headlight and the limited eyesight of the driver. Moreover, the driver will be blinded when he suddenly confronts a strong light coming toward him from the opposite side. Thus he can not see the road clearly and becomes disconcerted. Furthermore, in the inclement weather such as raining, snowing, and fogging, etc, the visible distance is much shorter and the driver becomes blurred and tired. All these make the driver nervous, which is dangerous and more easily to cause car accidents.

### Description of the Invention

The object of the present invention is to provide an infrared system for assisting driving vehicle to solve the aforementioned problems. That helps the driver see much farther and have enough time to react to emergency situations on the road.

In order to achieve the object, the present invention provides an infrared system for assisting driving vehicle that comprises an infrared imaging device for shooting the object before the vehicle in real time and a liquid crystal display (LCD) for displaying the images. The infrared imaging device is connected to a magnetic base and mounted onto the housing of the vehicle by the magnetic base. The LCD is mounted in the driver's cab.

Preferably, a first rotating mechanism is provided between the infrared imaging device and the magnetic base for adjusting the rotating angle of the infrared imaging device.

Preferably, the infrared imaging device comprises an un-cooled infrared imaging device for converting the photographed image of the object ahead the vehicle to the electrical signal and a processor for converting the electrical signal to a video signal.

Preferably, the LCD can be mounted onto the front windshield of the driver's cab by a glass cupula.

Preferably, a second rotating mechanism is provided between the glass cupula and the LCD for adjusting the deflection angle of the LCD.

Preferably, the infrared system for assisting driving vehicle further comprises a memory for storing the photographed images and the memory is connected to the LCD.

The infrared system for assisting driving vehicle according to the present invention has following advantages: the driver can see the object in the LCD 100 m before the vehicle, and thus he can identify the road, the walkers, the cyclists and the obstacles. Especially when he is tired and driving in the night, the system can help him to reduce the stress. He can be alert and wakeful to handle the emergency situations very quickly and properly. Thus the driving safety is improved.

### Description of the Drawing

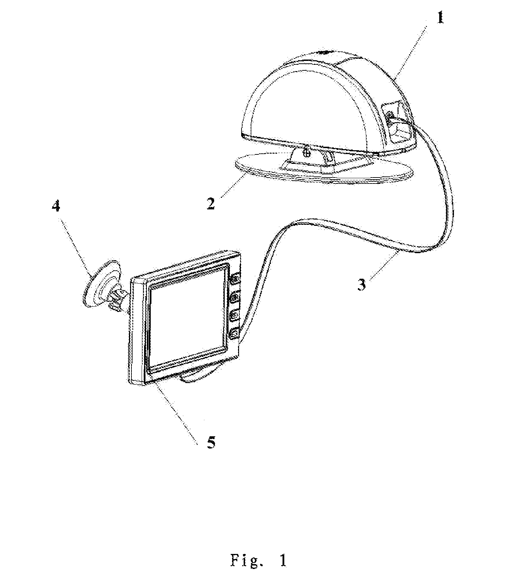

Fig.1 is a construction view of the infrared system for assisting driving vehicle according to the present invention.

### Description of the Invention

The object, technical solutions, and advantages of the present invention can be well understood by the following detailed description of the invention with reference to the drawings and embodiments. The exemplary embodiments of the infrared system for assisting driving vehicle according to the present invention are used to explain, but not to limit to, the present patent application.

Fig.1 is a construction view of an embodiment of the infrared system for assisting driving vehicle according to the present invention. The infrared system for assisting driving vehicle comprises an infrared imaging device 1 for catching real-timely the object ahead of the vehicle and a liquid crystal display (LCD) 5 for displaying the photographed image. The infrared imaging device 1 can be fixed to the housing of the vehicle, for example fixed on top of the front windshield of the vehicle, to photograph the area ahead of the vehicle. The LCD 5 can be mounted in the driver's cab, near to the steering wheel, for example, for facilitating the driver to watch it.

The infrared imaging device 1 comprises an un-cooled infrared detector for converting the photographed image of the object ahead of the vehicle to an electrical signal and a processor for converting the electrical signal to a video signal. Since the infrared imaging device 1 can receive the infrared light which is invisible for human being. The human body and object in the night can be therefore photographed. There are two kind of infrared imaging devices 1 which can be chosen: active infrared imaging device and passive infrared imaging device. The active infrared imaging device needs an infrared light source to illuminate the object and then the reflected infrared radiation of the object can be received and forms an image. For example, an infrared light source can be mounted to the front bumper of the vehicle, emitting infrared light to the area ahead the vehicle and the infrared imaging device 1 receives the infrared radiation reflected by the object in front to form an image and thus the image of the object in the area ahead the vehicle is caught. The passive infrared imaging device receives a thermal image formed by the infrared radiation of the object itself. And thus an infrared lighting source to be mounted to the front bumper of the vehicle is no more needed.

In a preferred embodiment, the infrared imaging device 1 is mounted onto the housing of the vehicle by a magnetic base 2. In other words, a first connector is provided at the bottom of the infrared imaging device 1. The first connector is connected to a second connector on the magnetic base 2 by a bolt or a snap member. The user can select a position for mounting the infrared imaging device 1 according to his needs. In addition, a first rotating mechanism can be provided between the infrared imaging device 1 and the magnetic base 2. The infrared imaging device 1 can be rotated from 0° to 360° horizontally by means of rotating mechanism. It can be also rotated vertically to some certain degree. The rotating angle can be set up according to the practical need. The driver can adjust the rotating angle of the infrared imaging device 1 according to the situation on the road. For example, the driver can turn the infrared imaging device 1 to the rear side of the vehicle to enhance the driving safety when he is backing the vehicle in the night.

As shown in Fig. 1, the infrared imaging device 1 can be connected to the LCD 5 by a cable 3. Of course, it can also be wireless connected, to transfer the video signal. In this embodiment, the LCD 5 is mounted onto the front windshield of the driver's cab by a glass cupula 4. In order that the LCD 5 can be watched from different angles, a second rotating mechanism is provided between the glass cupule 4 and the LCD 5 for adjusting the deflection angle of the LCD 5 to some certain degree.

In this embodiment, the infrared assisting system for driving in the night further comprises a memory for storing the photographed images. The memory is connected to the LCD 5.

It can be understood from the above description that the driver can see the object in the LCD 100 m ahead the vehicle, and thus he can identify the road, the walkers, the cyclists and the obstacles. Especially when he is tired and driving in the night the system can help him to reduce the stress. He can be alert and wakeful to handle the emergency situations very quickly and properly. Thus, the driving safety is improved.

The embodiment described above is a preferable embodiment. It should be noted that some variations and modifications can be made by person skilled in the art to the embodiment within the principle of the invention, and these variations and modifications fall into the protection scope of the present invention.

## Claims

1. An infrared system for assisting driving vehicle, comprising a infrared imaging device for photographing the object ahead the vehicle real-timely and a LCD for displaying the photographed image, wherein the infrared imaging device is connected to a magnetic base and mounted onto the housing of the vehicle by the magnetic base, wherein the LCD is mounted in the driver's cab.

2. An infrared system for assisting driving vehicle according to claim 1, **characterized in that** a first rotating mechanism is provided between the infrared imaging device and the magnetic base for adjusting the rotating angle of the infrared imaging device.

3. An infrared system for assisting driving vehicle according to claim 1, **characterized in that** the infrared imaging device comprises an un-cooled infrared imaging device for converting the photographed image of the object before the vehicle to an electrical signal and a processor for converting the electrical signal to a video signal.

4. An infrared system for assisting driving vehicle according to claim 1, **characterized in that** the LCD mounted onto the front windshield of the driver's cab by a glass cupule.

5. An infrared system for assisting driving vehicle according to claim 4, **characterized in that** a second rotating mechanism is provided between the glass cupule and the LCD for adjusting the deflection angle of the LCD.

6. An infrared system for assisting driving vehicle according to claim 1, **characterized in that** the infrared system for assisting driving vehicle further comprises a memory for storing the photographed images, wherein the memory is connected to the LCD.
